# EUROPÄISCHE PATENTSCHRIFT

(11) **EP 2 522 580 B1**
(45) Veröffentlichungstag und Bekanntmachung des Hinweises auf die Patenterteilung: **02.04.2014**
(21) Anmeldenummer: 12002937.6
(22) Anmeldetag: 26.04.2012
(51) Int. Cl.: B65B 9/04, B65B 59/04, B65B 65/02, B29C 33/30, B29C 33/34

(54) **Werkzeugwechseleinrichtung**
Tool swapping device
Dispositif de changement d'outil

(30) Priorität: 10.05.2011 DE 102011101051
(43) Veröffentlichungstag der Anmeldung: 14.11.2012
(73) Patentinhaber: MULTIVAC Sepp Haggenmüller GmbH & Co KG, 87787 Wolfertschwenden (DE)
(72) Erfinder: Ehrmann, Elmar, 87730 Bad Grönenbach (DE)
(74) Vertreter: Grünecker, Kinkeldey, Stockmair & Schwanhäusser

(56) Entgegenhaltungen:
- EP-A1- 0 467 069
- EP-A1- 0 895 933
- DE-A1- 10 011 264
- DE-A1- 10 359 478
- DE-A1-102007 027 789
- US-A- 3 650 411

## Beschreibung

Die Erfindung bezieht sich auf eine Werkzeugwechseleinrichtung einer Tiefziehverpackungsmaschine gemäß dem Oberbegriff des Anspruchs 1 und ein Verfahren nach Anspruch 6 zum Wechseln eines Werkzeugeinschubs.

Die Erfindung bezieht sich ferner auf eine Tiefziehverpackungsmaschine mit einer Werkzeugwechseleinrichtung (Anspruch 5).

Aus der EP 0 895 934 B1 der Anmelderin selbst ist eine Arbeitsstation mit einer Hubeinrichtung bekannt, bei der ein Werkzeugunterteil und ein Werkzeugoberteil über eine gemeinsame Kniehebelmechanik so bewegt werden, dass beim Absenken des Werkzeugunterteils das Werkzeugoberteil angehoben wird und umgekehrt. Dabei sind die Hübe der Werkzeuge unterschiedlich. Die Erfindung löst das Problem von über die Siegelebene überstehende Produkte beim Hineintransportieren in die Siegelstation. Beim Einführen von zu versiegelnden Verpackungsmulden mit überstehenden Produkten und beim Heraustransportieren von versiegelten Verpackungen wird das Siegelwerkzeugoberteil angehoben und das Produkt kollidiert nicht mit dem Siegelwerkzeugoberteil.

Aus der EP 0 467 069 A1 ist eine Tiefziehverpackungsmaschine bekannt, bei der ein Werkzeugunterteil seitlich aus der Tiefziehverpackungsmaschine unterhalb der Folienbahn herausziehbar ist. Dies findet ohne Beeinflussung der Folienbahn statt.

Werkzeugoberteile werden bei Tiefziehverpackungsmaschinen zu einem Austausch üblicherweise nach oben angehoben und gewechselt. Zu wechselnde Werkzeugeinschübe in Werkzeugoberteilen, beispielsweise an Form- oder Siegelstationen, die sich im Betrieb mit einem Teil zwischen den Transportketten bzw. den Kettenführungen befinden, werden nach oben als Einheit mit dem Werkzeugoberteil angehoben oder in Produktionsrichtung oberhalb der Folienbahn aus den Werkzeugoberteilen herausgezogen und gewechselt.

Aus der DE 103 59 478 A1 ist eine Tiefziehverpackungsmaschine bekannt, bei der ein Oberteil mit einem Oberwerkzeug beispielsweise an einer Siegelstation mittels vier Hubzylindern angehoben wird, damit das Oberwerkzeug seitlich aus dem Oberteil herausgenommen werden kann.

Aus der EP 0 895 933 A1 ist eine Tiefziehverpackungsmaschine mit einem Hubwerk bekannt, wobei das Hubwerk einen Oberhub für das Oberwerkzeug umfasst. Das Oberwerkzeug und ein Unterwerkzeug werden über ein gemeinsames Kniehebelhubwerk vertikal und zueinander entgegengesetzt bewegt.

Die DE 100 11 264 A1 offenbart eine Siegelvorrichtung zum Verschweißen einer Deckfolienbahn auf Becher.Die Aufgabe der Erfindung ist es, eine Möglichkeit für einen seitlichen Wechsel von einem Werkzeugeinschub eines Werkzeugoberteils in einer Tiefziehverpackungsmaschine zur Verfügung zu stellen.

Diese Aufgabe wird gelöst durch eine Werkzeugwechseleinrichtung mit den Merkmalen des Anspruchs 1 bzw. ein Verfahren nach Anspruch 6. Vorteilhafte Weiterbildungen der Erfindung sind in den Unteransprüchen angegeben.

Die erfindungsgemäße Werkzeugwechseleinrichtung für einen Werkzeugeinschub einer Arbeitsstation einer Tiefziehverpackungsmaschine sieht einen Werkzeugträger zur Aufnahme des Werkzeugeinschubs vor, und eine Kettenführung zum Transportieren eines bahnförmigen Materials durch die Arbeitsstation, wobei der Werkzeugträger und der Werkzeugeinschub gemeinsam in eine Wechselposition durch eine gegenüber der Kettenführung wenigstens einseitige Bewegung bewegbar sind. Eine solche Bewegung entfernt den Werkzeugeinschub auf einfache Weise von der Kettenführung weg, so dass die Störkonturen der Kettenführung den seitlichen Wechsel aus der Tiefziehverpackungsmaschine heraus nicht behindern.

Vorzugsweise sind der Werkzeugträger und der Werkzeugträger gemeinsam mittels einer Schwenkeinrichtung in eine Wechselposition und in eine Arbeitsposition bewegbar, wobei die Schwenkachse auf einer Seite einer ersten Kettenführung vorgesehen ist und die gemeinsame Bewegung des Werkzeugträgers und des Werkzeugeinschubs an einer Seite einer zweiten Kettenführung vorgesehen ist.

Alternativ ist es vorteilhaft, wenn der Werkzeugträger und der Werkzeugeinschub gemeinsam vertikal mittels eines Hubwerks in eine Wechselposition und in eine Arbeitsposition bewegbar sind. Eine solche Bewegung hebt den Werkzeugeinschub über die Kettenführung derart an, dass der Werkzeugeinschub ungehindert über die Kettenführung seitlich aus der Verpackungsmaschine herausbewegt werden kann.

Erfindungsgemäß ist die Arbeitsstation eine Formstation oder eine Siegelstation.

Der Werkzeugeinschub ist erfindungsgemäß bei einer Formstation eine Heizplatte oder bei einer Siegelstation eine Siegelplatte.

Es ist erfindungsgemäß, wenn der Werkzeugeinschub, beispielsweise als Heizplatte in einer Formstation, mit einer Kühlplatte der Formstation während des Betriebs der Tiefziehverpackungsmaschine in flächigem Kontakt steht, um einen als Heizplatte ausgeführte Werkzeugeinschub dauerhaft zu kühlen. Dabei ist der Kühlkreislauf im fest am Maschinenrahmen angebrachten Werkzeugträger bzw. der Kühlplatte der Formstation vorgesehen und ein Auslassen des Kühlwassers vor dem Herausziehen des Werkzeugeinschubs kann entfallen, was zu einer Verkürzung der Wechselzeit führt.

Vorzugsweise ist eine Tiefziehverpackungsmaschine mit einer erfindungsgemäßen Werkzeugwechseleinrichtung ausgerüstet, um den Wechsel eines Werkzeugeinschubs zu erleichtern und die dafür benötigte Zeit zu verkürzen.

Das erfindungsgemäße Verfahren zum Betrieb einer Werkzeugwechseleinrichtung einer Arbeitsstation in einer Tiefziehverpackungsmaschine zum gegenüber der Produktionsrichtung seitlichen Wechsel eines Werkzeugeinschubs sieht vor, dass ein den Werkzeugeinschub aufnehmender Werkzeugträger und der Werkzeugeinschub gemeinsam oberhalb einer Kettenführung zum Transportieren eines bahnförmigen Materials durch die Arbeitsstation in eine Wechselposition vertikal angehoben werden. Dies ermöglicht einen einfachen und schnellen Wechsel des Werkzeugeinschubs seitlich aus der Tiefziehverpackungsmaschine heraus, ohne dass ein besonders hoher Platzbedarf oberhalb der Arbeitsstation berücksichtigt werden muss. Oft befinden sich Zuführbänder direkt über der Formstation, um beispielsweise Portionen mit geschnittener Ware wie Wurst oder Käse automatisch in geformte Packungsmulden einzulegen. Diese Zuführbänder müssen beim erfinderischen Verfahren nicht mehr entfernt werden, um einen Werkzeugeinschub an einer Formstation wechseln zu können.

Vorzugsweise erfolgt die gemeinsame Bewegung des Werkzeugträgers und des Werkzeugeinschubs in die Wechselposition mit oder nach dem Öffnen der Arbeitsstation, wobei beim

Öffnen der Arbeitsstation ein Werkzeug, das sich an der einem Produkt abgewandten Seite des bahnförmigen Materials befindet, relativ vom Werkzeugeinschub, der sich auf der einem Produkt zugewandten Seite des bahnförmigen Materials befindet, wegbewegt wird.

Bevorzugt erfolgt die Bewegung des Werkzeugträgers und des Werkzeugeinschubs in die Arbeitsposition vor oder mit dem Schließen der Arbeitsstation, wobei beim Schließen der Arbeitsstation ein Werkzeug, das sich an der einem Produkt abgewandten Seite des bahnförmigen Materials befindet, relativ zum Werkzeugeinschub, der sich auf der einem Produkt zugewandten Seite des bahnförmigen Materials befindet, hinbewegt wird.

Die gemeinsame Bewegung des Werkzeugträgers und des Werkzeugeinschubs wird bevorzugt mittels eines Hubwerks ausgeführt, um einen bereits vorhandenen Antrieb der Arbeitsstation zu nutzen, oder mittels eines eigenen Aktuators ausgeführt, um die entsprechende Bewegung unabhängig zu den in der Arbeitsstation ablaufenden Bewegungen auszuführen.

Vorzugsweise erfolgt die gemeinsame Bewegung des Werkzeugträgers und des Werkzeugeinschubs, während das bahnförmige Material stillsteht oder nicht im Produktionsbetrieb ist.

Erfindungsgemäß wird der Werkzeugeinschub mittels einer Kühlplatte der Formstation gekühlt, indem der Werkzeugeinschub und die Kühlplatte der Formstation in flächigen Kontakt sind und die aktive Kühlung mittels eines Kühlmittelkreislaufs nur in der nicht bewegbaren Kühlplatte vorhanden ist. Weder ein Trennen des Werkzeugeinschubs vom Kühlwasserzulauf und Kühlwasserablauf noch ein Auslassen des Wassers aus dem Inneren des Werkzeugeinschubs sind notwendig. Dies führt zu einer weiteren Vereinfachung des Werkzeugwechsels.

Bevorzugt wird der Werkzeugeinschub mittels einer Steuerung automatisch zum Herausnehmen aus der Arbeitsstation entriegelt und/oder automatisch nach dem Einschieben in die Arbeitsstation verriegelt. Somit wird die exakte und wiederholbare Position des Werkzeugeinschubs in der Arbeitsstation sichergestellt und in Verbindung mit einer optionalen Sensorik kann ein Maschinenstart entsprechend freigegeben oder gesperrt werden.

Zweckmäßig ist es, wenn Energieleitungen zwischen dem Werkzeugeinschub und dem Werkzeugträger mittels Anschlusselementen automatisch beim Herausziehen des Werkzeugeinschubs gelöst und beim Einschieben des Werkzeugeinschubs verbunden werden.

Damit entfallen manuelle Tätigkeiten zum Abklemmen oder Abstecken der einzelnen Leitungsverbindungen und die Wechselzeit wird verkürzt.

Im Folgenden wird ein vorteilhaftes Ausführungsbeispiel der Erfindung anhand einer Zeichnung näher erläutert.

Im Einzelnen zeigen:
- Figur 1: eine perspektivische Ansicht einer Tiefziehverpackungsmaschine,
- Figur 2: eine Schnittansicht durch die Formstation in Produktionsrichtung mit einer erfindungsgemäßen Werkzeugwechseleinrichtung in einer geschlossenen Stellung,
- Figur 3: eine Schnittansicht durch die Formstation in Produktionsrichtung in einer geöffneten Stellung,
- Figur 4: wie Figur 3 mit seitlich herausbewegtem Werkzeugeinschub,
- Figur 5: eine Variante der erfindungsgemäßen Werkzeugwechseleinrichtung.

Gleiche Komponenten sind in den Figuren durchgängig mit gleichen Bezugszeichen versehen.

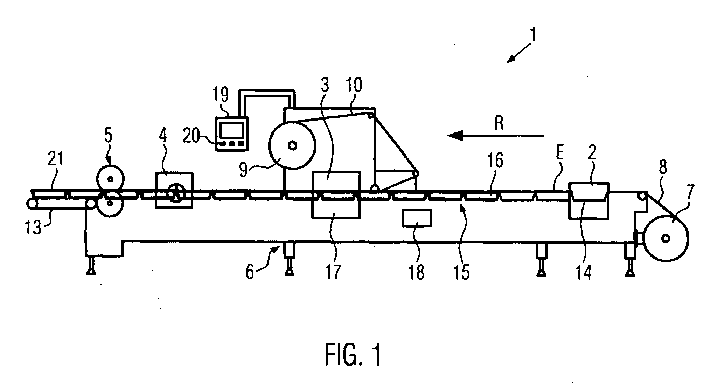

Figur 1 zeigt in schematischer Ansicht eine Tiefziehverpackungsmaschine 1, die eine Formstation 2, eine Siegelstation 3, eine Querschneideeinrichtung 4 und eine Längsschneideeinrichtung 5 aufweist, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der ein erstes bahnförmiges Material 8 abgezogen wird. Im Bereich der Siegelstation 3 ist ein Materialspeicher 9 vorgesehen, von dem ein zweites bahnförmiges Material 10, beispielsweise eine Deckelfolie, abgezogen wird. Ausgangsseitig ist an der Tiefziehverpackungsmaschine 1 eine Abfuhreinrichtung 13 in Form eines Transportbandes vorgesehen, mit der fertige, vereinzelte Verpackungen 21 abtransportiert werden. Ferner weist die Verpackungsmaschine 1 eine nicht dargestellte Vorschubeinrichtung auf, die das erste bahnförmige Material 8 ergreift und in einem Hauptarbeitstakt taktweise in der Arbeitsrichtung R weitertransportiert. Die Vorschubeinrichtung kann zum Beispiel durch seitlich angeordnete Transportketten realisiert sein.

In der dargestellten Ausführungsform ist die Formstation 2 als eine Tiefziehstation ausgebildet, in der in dem ersten bahnförmigen Material 8 durch Tiefziehen Packungsunterteile 14 geformt werden. Dabei kann die Formstation 2 derart ausgebildet sein, dass in der Richtung senkrecht zur Arbeitsrichtung R mehrere Packungsunterteile 14 nebeneinander gebildet werden. In Arbeitsrichtung R hinter der Formstation 2 ist eine Einlegestrecke 15 vorgesehen, in der die in dem ersten bahnförmigen Material 8 geformten Packungsunterteile 14 mit Produkt 16 befüllt werden.

Die Siegelstation 3 verfügt über eine verschließbare Kammer 17, in der die Atmosphäre in den Packungsunterteile 14 vor dem Versiegeln zum Beispiel durch Gasspülen mit einem Austauschgas oder mit einem Austausch-Gasgemisch ersetzt werden kann.

Die Querschneideeinrichtung 4 ist als Stanze ausgebildet, die das erste bahnförmige Material 8 und das zweite bahnförmige Material 10 in einer Richtung quer zur Arbeitsrichtung R zwischen benachbarten Packungsunterteilen 14 durchtrennt. Dabei arbeitet die Querschneideeinrichtung 4 derart, dass das erste bahnförmige Material 8 nicht über die gesamte Breite aufgeteilt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der das erste bahnförmige Material 8 und das zweite bahnförmige Material 10 zwischen benachbarten Packungsunterteilen 14 und am seitlichen Rand des ersten bahnförmigen Materials 8 durchtrennt werden, so dass hinter der Längsschneideeinrichtung 5 vereinzelte Verpackungen 21 vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

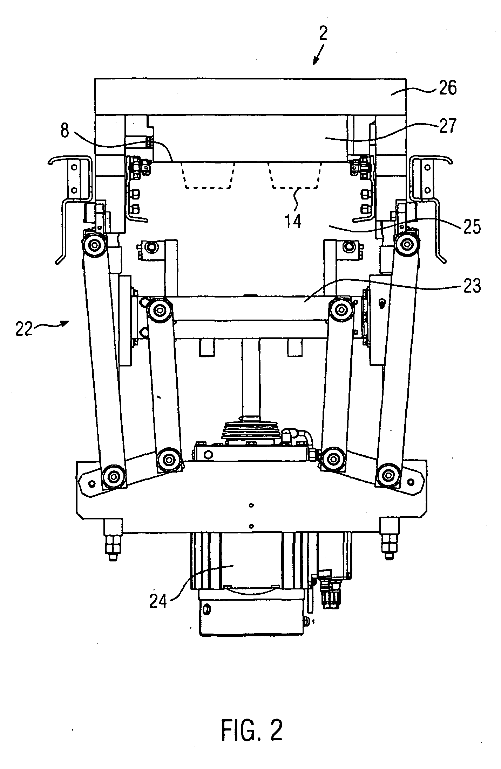

Figur 2 zeigt eine erfindungsgemäße Werkzeugwechseleinrichtung 22 der Formstation 2. Ein Hubwerk 23, das von einem Motor 24 angetrieben wird, bewegt zum Einen ein Formwerkzeugunterteil 25 unterhalb des ersten bahnförmigen Materials 8, und zum Anderen bewegt das Hubwerk 23 einen Werkzeugträger 26 bzw. ein Formwerkzeugoberteil gemeinsam mit einem darin eingeschobenen Werkzeugeinschub 27 oberhalb des ersten bahnförmigen Materials 8. In der dargestellten geschlossen Stellung befindet sich die Formstation 2 in ihrer Arbeitsposition. Der Werkzeugeinschub 27 ist als Heizplatte ausgeführt und die Unterseite der Heizplatte 27 steht mit dem ersten bahnförmigen Material 8 in flächigem Kontakt, um das Material 8 zu erwärmen. Das Formwerkzeugunterteil 25 liegt mit seiner Oberseite an dem ersten bahnförmigen Material 8 an, dabei wird das Material 8 zwischen dem Formwerkzeugunterteil 25 und der Heizplatte 27 so allseitig geklemmt, dass im Inneren des Formwerkzeugunterteils 25 ein Vakuum erzeugt werden kann, um das erwärmte Material 8 nach unten zu Packungsunterteilen 14 zu verformen.

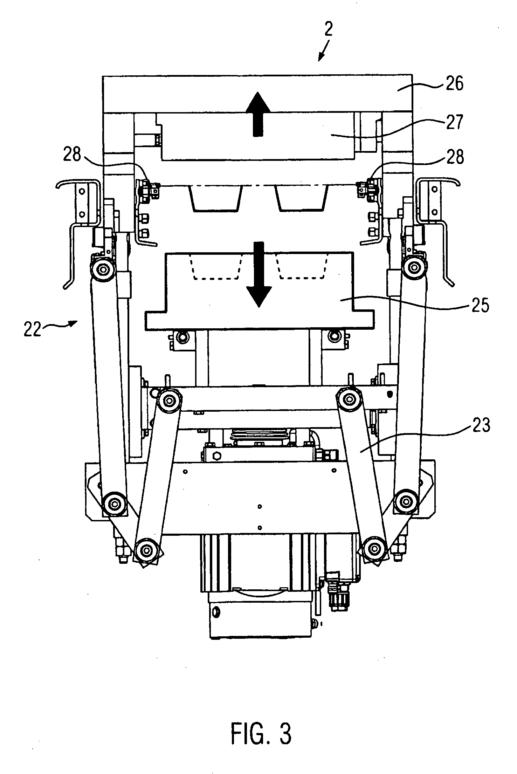

In Figur 3 ist die Formstation 2 in der Wechselposition. Das Hubwerk 23 hat das Formwerkzeugunterteil 25 abgesenkt und das Formwerkzeugoberteil 26 und den Werkzeugeinschub 27 soweit nach oben angehoben, dass sich die Unterseite des Werkzeugeinschubs 27 über der oberen Störkontur seitlicher Kettenführungen 28 befindet.

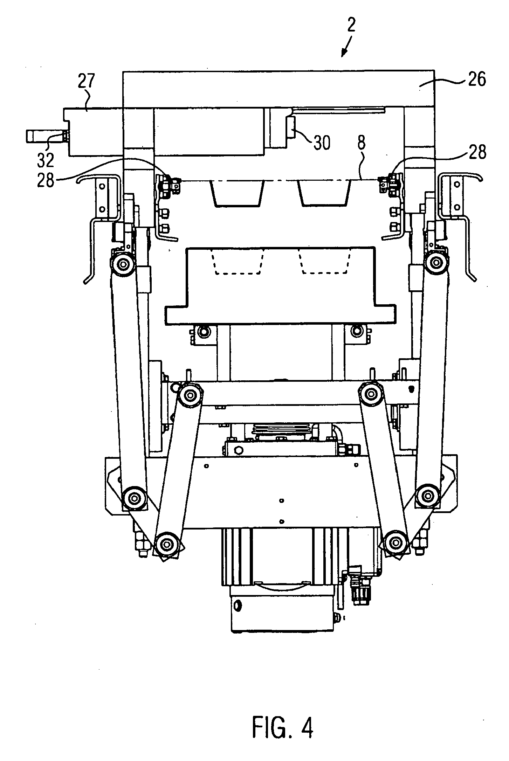

In dieser Wechselposition kann, wie in Figur 4 gezeigt, der Werkzeugeinschub seitlich unterhalb des Werkzeugträgers 26 und oberhalb der Kettenführungen 28 herausgezogen werden. Führungen 29 halten den Werkzeugeinschub 27 solange am Werkzeugträger 26, bis der Werkzeugeinschub 27 durch einen Bediener händisch übernommen werden kann.

Das Einschieben eines neuen Werkzeugeinschubs 27 erfolgt analog in umgekehrter Reihenfolge. Der Werkzeugträger 26 ist als Kühlplatte mit einem nicht dargestellten Wasserkreislauf ausgeführt. Dabei befindet sich die Unterseite der Kühlplatte 26 in der Ebene 31 in einem flächigen Kontakt mit der Heizplatte 27. Zur Fixierung und zum Anschluss von Elektrik, beispielsweise zum Ansteuern von Heizstäben in einer Heizplatte 27 zum Erwärmen des ersten bahnförmigen Materials 8, und Sensorik, beispielsweise zum Auswerten von Temperatursensoren in der Heizplatte 27, sind Anschluss- und/oder Fixierelemente 30 an der rechten Anschlagseite der Heizplatte 27 vorgesehen, die mit dem Werkzeugträger 26 verbindbar sind. Die Anschlusselemente für die Energiezuführungen sind als automatisch beim Herausziehen des Werkzeugeinschubs 27 lösende und beim Hineinschieben des Werkzeugeinschubs 27 verbindende Steckverbindungen ausgeführt. Über eine Klemmvorrichtung 32 wird der Werkzeugeinschub 27 an dem Werkzeugträger 26 in seiner eingeschobenen Arbeitsposition gesichert bzw. befestigt.

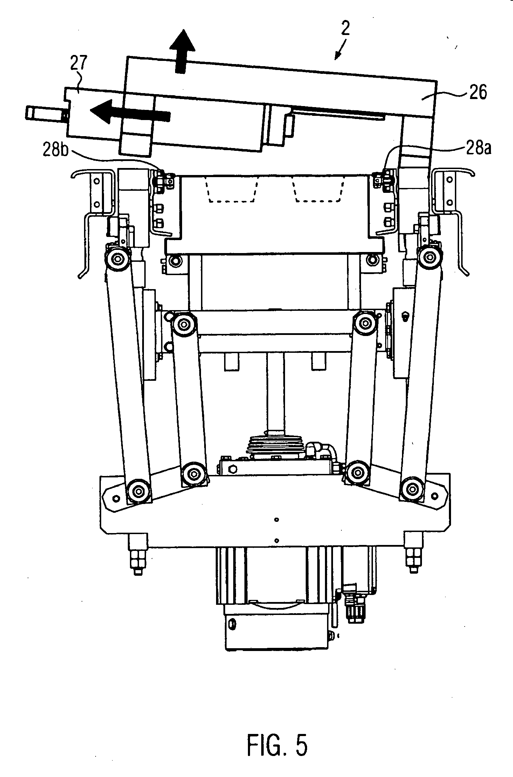

Figur 5 zeigt eine alternative erfindungsgemäße Werkzeugwechseleinrichtung 22. Dabei wird der Werkzeugträger 26 gemeinsam mit dem Werkzeugeinschub 27 um eine in Arbeitsrichtung R ausgerichtete Achse derart geschwenkt, dass der Werkzeugeinschub 27 oberhalb der Kettenführung 28 nach außen herausbewegt werden kann.

## Patentansprüche

1. Werkzeugwechseleinrichtung (22) für eine Arbeitsstation (2, 3) einer Tiefziehverpackungsmaschine (1), wobei ein Werkzeugeinschub (27) und ein Werkzeugträger (26) zur Aufnahme des Werkzeugeinschubs (27) vorgesehen sind und eine Kettenführung (28) zum Transportieren eines bahnförmigen Materials (8) durch die Arbeitsstation (2, 3) vorgesehen ist, **dadurch gekennzeichnet, dass** die Arbeitsstation eine Formstation (2) oder eine Siegelstation (3) ist und der Werkzeugeinschub (27) eine Heizplatte oder eine Siegelplatte ist, wobei der Werkzeugeinschub (27) mit einer Kühlplatte (26) während des Betriebs der Tiefziehverpackungsmaschine (1) in flächigem Kontakt steht, und wobei der Werkzeugträger (26) und der Werkzeugeinschub (27) gemeinsam in eine Wechselposition durch eine gegenüber der Kettenführung (28) wenigstens einseitige Bewegung bewegbar sind.

2. Werkzeugwechseleinrichtung nach Anspruch 1, **dadurch gekennzeichnet, dass** der Werkzeugträger (26) und der Werkzeugeinschub (27) gemeinsam mittels einer Schwenkeinrichtung in eine Wechselposition und in eine Arbeitsposition bewegbar sind, wobei die Schwenkachse auf einer Seite einer ersten Kettenführung (28a) vorgesehen ist und die gemeinsame Bewegung des Werkzeugträgers (26) und des Werkzeugeinschubs (27) an der Seite einer zweiten Kettenführung (28b) vorgesehen ist.

3. Werkzeugwechseleinrichtung nach Anspruch 1, **dadurch gekennzeichnet, dass** der Werkzeugträger (26) und der Werkzeugeinschub (27) gemeinsam vertikal mittels eines Hubwerks (23) in eine Wechselposition und in eine Arbeitsposition bewegbar sind.

4. Werkzeugwechseleinrichtung nach einem der vorangehenden Ansprüche, **dadurch gekennzeichnet, dass** ein Kühlkreislauf im Werkzeugträger (26) vorgesehen ist.

5. Tiefziehverpackungsmaschine (1) mit einer Werkzeugwechseleinrichtung (22) nach einem der vorangehenden Ansprüche.

6. Verfahren zum Betrieb einer Werkzeugwechseleinrichtung (22) einer Arbeitsstation (2, 3) einer Tiefziehverpackungsmaschine (1) zum gegenüber einer Arbeitsrichtung (R) seitlichen Wechseln eines Werkzeugeinschubs (27), wobei ein den Werkzeugeinschub (27) aufnehmender Werkzeugträger (26) und der Werkzeugeinschub (27) gemeinsam oberhalb einer Kettenführung (28) zum Transportieren eines bahnförmigen Materials (8) durch die Arbeitsstation (2, 3) in eine Wechselposition vertikal angehoben werden, wobei der Werkzeugeinschub (27) mittels einer Kühlplatte (26) mittels einer Kontaktberührung mit der Kühlplatte (26) gekühlt wird.

7. Verfahren nach Anspruch 6, **dadurch gekennzeichnet, dass** die gemeinsame Bewegung des Werkzeugträgers (26) und des Werkzeugeinschubs (27) in die Wechselposition mit oder nach dem Öffnen der Arbeitsstation (2, 3) erfolgt, wobei beim Öffnen der Arbeitsstation (2, 3) ein Werkzeug (25), das sich an der einem Produkt (16) abgewandten Seite des bahnförmigen Materials (8) befindet, relativ vom Werkzeugeinschub (27), der sich auf der einem Produkt (16) zugewandten Seite des bahnförmigen Materials (8) befindet, wegbewegt wird.

8. Verfahren nach einem der Ansprüche 6 oder 7, **dadurch gekennzeichnet, dass** die Bewegung des Werkzeugträgers (26) und des Werkzeugeinschubs (27) in die Arbeitsposition vor oder mit dem Schließen der Arbeitsstation (2, 3) erfolgt, wobei beim Schließen der Arbeitsstation (2, 3) ein Werkzeug (25), das sich an der einem Produkt (16) abgewandten Seite des bahnförmigen Materials (8) befindet, relativ zum Werkzeugeinschub (27), der sich auf der einem Produkt (16) zugewandten Seite des bahnförmigen Materials (8) befindet, hinbewegt wird.

9. Verfahren nach einem der Ansprüche 6 bis 8, **dadurch gekennzeichnet, dass** die gemeinsame Bewegung des Werkzeugträgers (26) und des Werkzeugeinschubs (27) mittels eines Hubwerks (22) oder eines eigenen Aktuators ausgeführt wird.

10. Verfahren nach einem der Ansprüche 6 bis 9, **dadurch gekennzeichnet, dass** die gemeinsame Bewegung des Werkzeugträgers (26) und des Werkzeugeinschubs (27) erfolgt, während das bahnförmige Material (8) stittsteht.

11. Verfahren nach einem der Ansprüche 6 bis 10, **dadurch gekennzeichnet, dass** der Werkzeugeinschub (27) und/oder Anschlusselemente (30) automatisch zum Herausnehmen aus der Arbeitsstation (2, 3) entriegelt und/oder automatisch nach dem Einschieben in die Arbeitsstation (2, 3) verriegelt wird.

12. Verfahren nach einem der Ansprüche 8 bis 11, **dadurch gekennzeichnet, dass** Energieleitungen zwischen dem Werkzeugeinschub (27) und dem Werkzeugträger (26) mittels Anschlusselemente (30) automatisch beim Herausziehen des Werkzeugeinschubs (27) gelöst und beim Einschieben des Werkzeugeinschubs (27) verbunden werden.

## Claims

1. A tool changing device (22) for a work station (2, 3) of a thermoform packaging machine (1), wherein a tool insert (27) and a tool carrier (26) for receiving therein the tool insert (27) are provided, and a chain guide (28) for conveying a web-shaped material (8) through the work station (2, 3) is provided, **characterized in that** the work station is a forming station (2) or a sealing station (3) and the tool insert (27) is a heating plate or a sealing plate, wherein the tool insert (27) is in large-area contact with a cooling plate of the forming station (2), when the thermoform packaging machine (1) is in operation, and wherein the tool carrier (26) and the tool insert (27) are adapted to be moved, in common, to a tool changing position through a movement to at least one side relative to the chain guide (28).

2. A tool changing device according to claim 1, **characterized in that** the tool carrier (26) and the tool insert (27) are adapted to be moved, in common, to a tool changing and a working position by means of a pivoting device, the pivot axis being provided on a side of a first chain guide (28a) and the common movement of the tool carrier (26) and of the tool insert (27) being provided on the side of a second chain guide (28b).

3. A tool changing device according to claim 1, **characterized in that** the tool carrier (26) and the tool insert (27) are adapted to be vertically moved, in common, to a tool changing position and to a working position by means of a lifting unit (23).

4. A tool changing device according to one of the previous claims, **characterized in that** a cooling circuit is provided in the tool carrier (26).

5. A thermoform packaging machine (1) comprising a tool changing device (22) according to one of the preceding claims.

6. A method of operating a tool changing device (22) of a work station (2, 3) of a thermoform packaging machine (1) for exchanging a tool insert (27) laterally relative to a working direction (R), wherein a tool carrier (26) accommodating the tool insert (27) and the tool insert (27) are vertically raised, in common, above a chain guide (28) used for conveying a web-shaped material (8) through the work station (2, 3), to a tool changing position, and wherein the tool insert (27) is cooled by means of a cooling plate (26) of the forming station (2) through contact with said cooling plate (26).

7. A method according to claim 6, **characterized in that** the common movement of the tool carrier (26) and the tool insert (27) to the tool changing position takes place simultaneously with or after opening of the work station (2, 3), wherein, during opening of the work station (2, 3), a tool (25), which is positioned on the side of the web-shaped material (8) facing away from a product (16), is moved relative to and away from the tool insert (27), which is positioned on the side of the web-shaped material (8) facing a product (16).

8. A method according to one of the claims 6 or 7, **characterized in that** the movement of the tool carrier (26) and the tool insert (27) to the tool changing position takes place before or simultaneously with the closing of the work station (2, 3), wherein, during closing of the work station (2 ,3), a tool (25), which is positioned on the side of the web-shaped material (8) facing away from a product, is moved relative to and towards the tool insert (27), which is positioned on the side of the web-shaped material (8) facing a product (16).

9. A method according to one of the claims 6 to 8, **characterized in that** the common movement of the tool carrier (26) and the tool insert (27) is executed by means of a lifting unit (23) or a separate actuator.

10. A method according to one of the claims 6 to 9, **characterized in that** the common movement of the tool carrier (26) and the tool insert (27) takes place while the web-shaped material (8) is standing still.

11. A method according to one of the claims 6 to 10, **characterized in that** the tool insert (27) and/or the connection elements (30) are automatically unlocked for removal from the work station (2, 3) and/or automatically locked after having been inserted in the work station (2, 3).

12. A method according to one of the claims 6 to 11, **characterized in that** power lines between the tool insert (27) and the tool carrier (26) are, by means of connection elements (30), automatically disconnected when the tool insert (27) is being pulled out, and automatically connected when the tool insert (27) is being pushed in.

## Revendications

1. Dispositif de changement d'outil (22) pour un poste de travail (2, 3) d'une machine de production d'emballages thermoformés par emboutissage (1), l'ensemble comprenant.un insert coulissant d'outil (27) et un support d'outil (26) destiné à recevoir l'insert coulissant d'outil (27), ainsi qu'un guidage à chaine (28) pour transporter un matériau en forme de bande (8) à travers le poste de travail (2, 3),
**caractérisé**
**en ce que** le poste de travail est un poste de formage (2) ou un poste de scellage (3), et l'insert d'outil coulissant (27) est une plaque chauffante ou une plaque de scellage, en ce que l'insert coulissant d'outil (27) est en contact de surface avec une plaque de refroidissement (26) au cours du fonctionnement de la machine de production d'emballages thermoformés par emboutissage (1), et en ce que le support d'outil (26) et l'insert coulissant d'outil (27) peuvent être déplacés en commun dans une position de changement, par un mouvement au moins unilatéral ou d'un côté par rapport au guidage à chaine (28).

2. Dispositif de changement d'outil selon la revendication 1, **caractérisé en ce que** le support d'outil (26) et l'insert coulissant d'outil (27) sont déplaçables en commun, au moyen d'un dispositif de pivotement, dans une position de changement et dans une position de travail, l'axe de pivotement étant prévu sur un côté d'un premier guidage à chaine (28a), et le mouvement commun du support d'outil (26) et de l'insert coulissant d'outil (27) étant prévu sur le côté d'un deuxième guidage à chaine (28b).

3. Dispositif de changement d'outil selon la revendication 1, **caractérisé en ce que** le support d'outil (26) et l'insert coulissant d'outil (27) peuvent être déplacés en commun, verticalement, au moyen d'un groupe de levage (23), dans une position de changement et dans une position de travail.

4. Dispositif de changement d'outil selon l'une des revendications précédentes, **caractérisé en ce qu'**il est prévu un circuit de refroidissement dans le support d'outil (26).

5. Machine de production d'emballages thermoformés par emboutissage (1), comprenant un dispositif de changement d'outil (22) selon l'une des revendications précédentes.

6. Procédé pour faire fonctionner un dispositif de changement d'outil (22) d'un poste de travail (2, 3) d'une machine de production d'emballages thermoformés par emboutissage (1), destiné au changement, latéral par rapport à une direction de travail (R), d'un insert coulissant d'outil (27), procédé d'après lequel un support d'outil (26) recevant l'insert coulissant d'outil (27) et l'insert coulissant d'outil (27) sont soulevés verticalement, en commun, dans une position de changement au-dessus d'un guidage à chaine (28) destiné au transport d'un matériau (8) sous forme de bande à travers le poste de travail (2, 3), et d'après lequel l'insert coulissant d'outil (27) est refroidi au moyen d'une plaque de refroidissement (26) moyennant un contact de surface avec la plaque de refroidissement (26).

7. Procédé selon la revendication 6, **caractérisé en ce que** le mouvement commun du support d'outil (26) et de l'insert coulissant d'outil (27) dans la position de changement, s'effectue avec ou après l'ouverture du poste de travail (2, 3), et **en ce que** lors de l'ouverture du poste de travail (2, 3), un outil (25), qui se trouve sur le côté du matériau (8) en forme de bande, opposé à celui dirigé vers un produit (16), est éloigné de l'insert coulissant d'outil (27) qui se trouve sur le côté du matériau (8) en forme de bande, dirigé vers un produit (16).

8. Procédé selon l'une des revendications 6 ou 7, **caractérisé en ce que** le mouvement du support d'outil (26) et de l'insert coulissant d'outil (27) dans la position de travail, s'effectue avant ou avec la fermeture du poste de travail (2, 3), et **en ce que** lors de la fermeture du poste de travail (2, 3), un outil (25), qui se trouve sur le côté du matériau (8) en forme de bande, opposé à celui dirigé vers un produit (16), est déplacé relativement vers l'insert coulissant d'outil (27) qui se trouve sur le côté du matériau (8) en forme de bande, dirigé vers un produit (16).

9. Procédé selon l'une des revendications 6 à 8, **caractérisé en ce que** le mouvement commun du support d'outil (26) et de l'insert coulissant d'outil (27) est effectué au moyen d'un groupe de levage (22) ou d'un actionneur qui leur est propre.

10. Procédé selon l'une des revendications 6 à 9, **caractérisé en ce que** le mouvement commun du support d'outil (26) et de l'insert coulissant d'outil (27) s'effectue pendant que le matériau (8) en forme de bande est à l'arrêt.

11. Procédé selon l'une des revendications 6 à 10, **caractérisé en ce que** l'insert coulissant d'outil (27) et/ou des éléments de raccordement (30) sont déverrouillés automatiquement pour le retrait hors du poste de travail (2, 3), et/ou sont verrouillés automatiquement après l'insertion dans le poste de travail (2, 3).

12. Procédé selon l'une des revendications 8 à 11, **caractérisé en ce que** des conduites d'énergie entre l'insert coulissant d'outil (27) et le support d'outil (26) sont automatiquement interrompues lors du retrait de l'insert coulissant d'outil (27), et mutuellement reliées lors de l'insertion de l'insert coulissant d'outil (27), au moyen d'éléments de raccordement (30).
